# EUROPÄISCHE PATENTSCHRIFT

(11) **EP 3 785 421 B1**
(45) Veröffentlichungstag und Bekanntmachung des Hinweises auf die Patenterteilung: **19.05.2021**
(21) Anmeldenummer: 20713272.1
(22) Anmeldetag: 20.03.2020
(51) Int. Cl.: H04L 29/06, H04W 12/02, H04W 84/00, H04L 29/08, H04W 88/04

(54) **VERFAHREN ZUM ANONYMISIERTEN BEREITSTELLEN VON DATEN EINES ERSTEN FAHRZEUGS FÜR EINE FAHRZEUGEXTERNE SERVEREINRICHTUNG SOWIE ANONYMISIERUNGSVORRICHTUNG UND KRAFTFAHRZEUG**
METHOD FOR THE ANONYMIZED PROVISION OF DATA OF A FIRST VEHICLE FOR A VEHICLE-EXTERNAL SERVER DEVICE, AND ANONYMIZATION APPARATUS AND MOTOR VEHICLE
PROCÉDÉ DE FOURNITURE ANONYMISÉE DE DONNÉES D'UN PREMIER VÉHICULE À UN SYSTÈME DE SERVEUR EXTERNE AU VÉHICULE AINSI QUE DISPOSITIF D'ANONYMISATION ET VÉHICULE À MOTEUR

(30) Priorität: 09.04.2019 DE 102019205033
(43) Veröffentlichungstag der Anmeldung: 03.03.2021
(73) Patentinhaber: Audi AG, 85045 Ingolstadt (DE)
(72) Erfinder: ERNST, Sebastian, 85049 Ingolstadt (DE); BUCK, Andreas, 90617 Puschendorf (DE)
(86) Internationale Anmeldenummer: PCT/EP2020/057724
(87) Internationale Veröffentlichungsnummer: WO 2020/207755

(56) Entgegenhaltungen:
- EP-A1- 2 983 381
- WO-A1-2018/000084
- DE-A1-102014 005 589
- US-A1- 2018 062 959
- US-A1- 2018 285 767

## Beschreibung

Die Erfindung betrifft ein Verfahren zum anonymisierten Bereitstellen von Daten eines ersten Fahrzeugs für eine fahrzeugexterne Servereinrichtung. Weiter betrifft die Erfindung auch eine Anonymisierungsvorrichtung zum anonymisierten Bereitstellen von Daten des ersten Fahrzeugs für die fahrzeugexterne Servereinrichtung. Schließlich betrifft die Erfindung auch ein Kraftfahrzeug mit der genannten Anonymisierungsvorrichtung.

Aus dem Stand der Technik sind verschiedene Methoden zum Senden von Daten aus einem Kraftfahrzeug heraus, also zur Kommunikation aus einem Kraftfahrzeug heraus bekannt. Insbesondere eine private Fahrzeug-zu-Fahrzeug-Kommunikation spielt hierbei eine entscheidende Rolle.

Zum Beispiel ist aus der US 2018/0027600 A1 ein Verfahren für eine private Fahrzeug-zu-Fahrzeug-Kommunikation bekannt. Dazu umfasst ein Fahrzeug ein Fahrzeugkommunikationssystem mit Sensoren, um ein Zielfahrzeug zu beobachten, sowie ein Steuergerät. Das Steuergerät generiert eine pseudoanonyme Kennung basierend auf einem Identifikationsmerkmal und einem Merkmal des Zielfahrzeugs. Zusätzlich überträgt das Steuergerät eine erste Nachricht mit der pseudoanonymen Kennung, eine Zufallsnummer und einen öffentlichen Schlüssel. Als Reaktion auf das Empfangen einer zweiten Nachricht mit dem Identifikationsmerkmal und der Zufallsnummer überträgt das Steuergerät eine in der zweiten Nachricht eingebettete dritte Nachricht, die mit einem symmetrischen Schlüssel verschlüsselt wurde.

Weiterhin ist aus der WO 2018/000084 A1 ein Verfahren zum Übertragen von Nachrichten für eine zuverlässige Fahrzeugkommunikation bekannt.

Nachteil des Stands der Technik ist, dass die Daten zwar verschlüsselt gesendet werden, aber der Absender der Daten stets bekannt ist.

Die Aufgabe der vorliegenden Erfindung liegt nun darin, Daten von einem Fahrzeug aus anonymisiert bereitzustellen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Durch die Erfindung ist ein Verfahren zum anonymisierten Bereitstellen von Daten eines Fahrzeugs für eine fahrzeugexterne Servereinrichtung bereitgestellt. In dem Verfahren wird zunächst gemäß einer festgelegten oder festlegbaren Bedingung zwischen einem Senden der Daten direkt an die fahrzeugexterne Servereinrichtung oder einem Senden der Daten über ein zweites Fahrzeug, das mit dem ersten Fahrzeug in Kommunikationsverbindung steht, an die fahrzeugexterne Servereinrichtung entschieden. Die Daten werden anschließend entsprechend der Entscheidung gesendet.

Mit anderen Worten werden die Daten also entweder direkt oder indirekt in Abhängigkeit von der festgelegten oder festlegbaren Bedingung an die fahrzeugexterne Servereinrichtung gesendet beziehungsweise bereitgestellt. Das zweite Fahrzeug kann somit als Zwischenstation zum Versenden der Daten, die insbesondere Fahrzeugdaten darstellen, angesehen werden.

Der Erfindung liegt die Erkenntnis oder Anforderung zugrunde, dass für viele Anwendungen eine Zuordnung von Absenderinformationen, also eine Authentifizierung des Fahrzeugs zu den Daten, also den Fahrzeugdaten, auch Nutzdaten genannt, beim Hinterlegen der Daten in einer fahrzeugexternen Servereinrichtung verhindert werden sollte. Insbesondere bei persönlichen Daten, wie beispielsweise einer aktuellen Position beziehungsweise GPS-Informationen, einer Geschwindigkeit oder einer Drehzahl sollte eine Verkettung der Absenderinformationen mit den Daten vermieden werden. Dadurch kann verhindert werden, dass beispielsweise beim Überprüfen der Daten, die in der fahrzeugexternen Servereinrichtung hinterlegt sind, ein Fahrer des Fahrzeugs beispielsweise aufgrund von einer erhöhten Geschwindigkeit im Nachhinein belangt werden kann.

Eine räumliche Trennung der Daten von den Absenderinformationen reicht dabei in der Regel nicht aus. Mit räumlicher Trennung ist dabei gemeint, dass die Daten und die Absenderinformationen in unterschiedlichen Speichereinheiten der fahrzeugexternen Servereinrichtung gespeichert werden. Das Prinzip der räumlichen Trennung ermöglicht nämlich mit hinreichendem Aufwand problemlos eine Verkettung der Daten mit den Anmeldeinformationen, wie beispielsweise einer Fahrgestellnummer, zum Beispiel über eine IP-Adresse, die mit den anderen Informationen und den Daten hinterlegt wird, oder andere Eigenschaften in Bezug auf den Transport der Daten beziehungsweise anderer Informationen, wie beispielsweise einem Zeitstempel.

Gleichzeitig sollten die Daten jedoch für andere Verkehrsteilnehmer, wie beispielsweise andere Fahrzeuge, nutzbar sein. Zum Beispiel kann eine Position des Fahrzeug im Zusammenhang mit einer Schlaglocherkennung an ein anderes Fahrzeug mitgeteilt werden. Dem anderen Fahrzeug kann somit die Schlaglochposition gemeldet werden und ein Fahrwerk des anderen Fahrzeugs kann beispielsweise geeignet eingestellt werden, um einen Schaden an dem Fahrzeug zu vermeiden und gegebenenfalls eine Federung des Fahrzeugs zu verbessern. Daher sind alternative Verfahren zur Anonymisierung der Daten, wie zum Beispiel ein Verrauschen der Daten hier nicht anwendbar. Anders ausgedrückt, sollte ein Verfälschen, wie beispielsweise ein Verrauschen, der Nutzdaten vermieden werden, da die Nutzdaten, die beispielsweise die tatsächliche Schlaglochposition nicht mehr mit der übermittelten Schlaglochposition an das weitere Fahrzeug übereinstimmt. Durch das Verfälschen können die Nutzdaten also für viele Anwendungen weniger brauchbar bis unbrauchbar werden.

Durch die Erfindung ist nun ein Verfahren bereitgestellt, durch das eine Zuordnung der Absenderinformationen zu den Daten verhindert werden kann. Das Verfahren basiert dabei auf dem Prinzip der Anonymisierung des Absenders, also des ersten Fahrzeugs, durch mögliches Übermitteln der Daten über einen oder gegebenenfalls auch mehrere Mittelsmänner, also das zweite Fahrzeug. Eine zu versendende Nachricht, also die Daten, können gegebenenfalls nicht direkt an die Servereinrichtung geschickt werden, sondern in Abhängigkeit von der Bedingung gegebenenfalls auch zunächst an das zweite Fahrzeug gesendet werden. Sind die Daten schließlich an die fahrzeugexterne Servereinrichtung übermittelt, kann die fahrzeugexterne Servereinrichtung die Daten speichern und zum Abrufen beziehungsweise Senden an andere Verkehrsteilnehmer, wie beispielsweise andere Fahrzeuge, bereitstellen.

Hierdurch ergibt sich der Vorteil, dass die fahrzeugexterne Servereinrichtung nicht mit Gewissheit sagen kann, wer der ursprüngliche Absender der Daten ist, also welches Fahrzeug die Daten ursprünglich bereitgestellt hat. Die Anonymisierung kann somit nach dem Prinzip der glaubhaften Abstreitbarkeit (plausible deniability) erfolgen. Insbesondere stellt bereits die Möglichkeit eines genommenen Umwegs der Daten zum Beispiel über das zweite Fahrzeug aus Sicht der fahrzeugexternen Servereinrichtung ein ausreichendes Anonymisierungskriterium dar. Böswillige Mittelsmänner könnten den Inhalt der Nachricht zwar im Klartext lesen, allerdings keine Rückschlüsse auf den Ursprung der Daten schließen.

Die fahrzeugexterne Servereinrichtung kann beispielsweise als zentrales Backend, das insbesondere von einem Hersteller des Fahrzeugs bereitgestellt sein kann, ausgebildet sein. Ist die Bedingung festgelegt, kann die Bedingung beispielsweise in einem Speicher des ersten Fahrzeugs hinterlegt sein. Ist die Bedingung hingegen festlegbar, kann die Bedingung beispielsweise auch von der fahrzeugexternen Servereinrichtung an das erste Fahrzeug mitgeteilt werden. Alternativ kann die Bedingung von dem ersten Fahrzeug auch selbst bei jedem Übermitteln von Daten zum Beispiel mithilfe eines Zufallsgenerators zufällig festgelegt werden.

Zu der Erfindung gehören auch Ausführungsformen, durch die sich zusätzliche Vorteile ergeben.

Eine Ausführungsform sieht vor, dass das erste Fahrzeug, die fahrzeugexterne Servereinrichtung an eine Vielzahl von weiteren Fahrzeugen Teilnehmer eines Ad-Hoc-Netzes darstellen, wobei das zweite Fahrzeug zum Senden der Daten zufällig aus der Vielzahl an weiteren Fahrzeugen ausgewählt wird.

Als zufällig kann dabei verstanden werden, dass das zweite Fahrzeug mithilfe eines Zufallsalgorithmus beziehungsweise eines Zufallsgenerators bestimmt wird. Somit kann das zweite Fahrzeug im Rahmen der Möglichkeiten des Zufallsalgorithmus also zufällig aus den übrigen Fahrzeugen als Teilnehmer des Ad-Hoc-Netzes ausgewählt werden.

Vorzugsweise kann das zuvor beschriebene Verfahren zum anonymisierten Bereitstellen der Daten dann auch von dem zweiten Fahrzeug ausgeführt werden. Das zweite Fahrzeug kann also ebenfalls gemäß einer festgelegten oder festlegbaren Bedingung zwischen dem Senden der Daten direkt an die fahrzeugexterne Servereinrichtung oder dem Senden über ein weiteres Fahrzeug, das mit dem zweiten Fahrzeug in Kommunikationsverbindung steht, an die fahrzeugexterne Servereinrichtung entscheiden. Anschließend kann das zweite Fahrzeug die Daten entsprechend der Entscheidung senden.

Jede Übertragung der Daten von einem an ein anderes Fahrzeug kann als Hop bezeichnet werden. Das Senden der Daten von dem ersten an das zweite Fahrzeug zum Weiterleiten an die fahrzeugexterne Servereinrichtung kann also einen ersten Hop, also eine erste Übertragung, zum Anonymisieren der Daten darstellen. Wird gemäß der festgelegten oder festlegbaren Bedingung entschieden, dass die Daten von dem zweiten Fahrzeug über ein weiteres Fahrzeug als einen Mittelsmann beziehungsweise eine Zwischenstation oder Relaisstation an die fahrzeugexterne Servereinrichtung gesendet werden, kann dies als zweiter Hop der Daten verstanden werden. Analog kann auch jedes weitere Fahrzeug aus der Vielzahl an weiteren Fahrzeugen des Ad-Hoc-Netzes ausgebildet sein, das Verfahren zum anonymisierten Bereitstellen der Daten an die fahrzeugexterne Servereinrichtung durchzuführen. Abhängig von der festgelegten oder festlegbaren Bedingung können die Daten somit über n Zwischenstationen, also n Fahrzeuge, bis zur fahrzeugexternen Servereinrichtung weitergeleitet werden. Dadurch kann die sogenannte n-Hop-Anonymisierung der Daten realisiert werden.

Hierdurch ergibt sich der Vorteil, dass der ursprüngliche Absender der Nachricht, also das erste Fahrzeug, durch Senden der Daten über einen oder mehrere Mittelsmänner anonymisiert werden kann. Das nächste Fahrzeug in der Sendekette verdeckt insbesondere das Fahrzeug, das die Nachricht zuvor gesendet hatte. Der Empfänger der Daten, also entweder das nächste Fahrzeug in der Sendekette oder die fahrzeugexterne Servereinrichtung, kennt seine Funktion in der Sendekette nicht und hat somit keine Sicherheit über den Orginator, also den ursprünglichen Absender der Daten. Durch eine Verlängerung der Sendekette kann auch die Anonymisierung verstärkt werden.

Das Ad-Hoc-Netz kann in diesem Zusammenhang als drahtlose Netzwerktopologie zwischen zwei oder mehr Endgeräten, also Teilnehmern, ohne feste Infrastruktur verstanden werden. Die Kommunikationsverbindung der Teilnehmer untereinander kann dabei insbesondere im Fahrbetrieb dauerhaft mit allen Teilnehmern oder beispielsweise nur bei Bedarf zum Senden der Daten hergestellt werden. Die Größe des Ad-Hoc-Netzes, also die Anzahl der Teilnehmer, kann insbesondere deterministisch festgelegt sein. Alternativ kann auch eine Distanz der Fahrzeuge als Teilnehmer des Ad-Hoc-Netzes zueinander und/oder Ländergrenzen und/oder Kommunikationskosten bei der Bildung des Ad-Hoc-Netzes berücksichtigt werden. Besonders bevorzugt kann die fahrzeugexterne Servereinrichtung auch einen Teilnehmer von mehr als einem Ad-Hoc-Netz darstellen.

Eine weitere Ausführungsform sieht vor, dass das Ad-Hoc-Netz in Abhängigkeit von einem Betriebszustand der Fahrzeuge als Teilnehmer angepasst wird. Anders ausgedrückt, kann eine Größe des Ad-Hoc-Netzes, also eine Anzahl an teilnehmenden Fahrzeugen des Ad-Hoc-Netzes, unter Berücksichtigung des Betriebszustands der jeweiligen Fahrzeuge verändert werden. Beispielsweise können nur Fahrzeuge als Teilnehmer bei dem Ad-Hoc-Netz angemeldet sein, die sich in einem Betriebszustand eines Fahrbetriebs oder Standbetriebs befinden. Besonders bevorzugt kann dabei eine Zündung des Fahrzeugs aktiviert sein. Im Gegensatz dazu kann ein Fahrzeug, welches sich in einem ausgeschalteten Betriebszustand befindet, von dem Ad-Hoc-Netz abgemeldet sein, also keinen Teilnehmer des Ad-Hoc-Netzes darstellen.

Bevorzugt kann das Ad-Hoc-Netz als autonomes Ad-Hoc-Netz ausgebildet sein, welches sich selbstständig aufbaut und konfiguriert.

Eine weitere Ausführungsform sieht vor, dass bei mehrmaligem Senden von Daten die Daten höchstens einmal über jedes der Vielzahl an Fahrzeugen an die fahrzeugexterne Servereinrichtung gesendet werden.

Insbesondere kann dies das mehrmalige Senden von Daten während einer ersten Fahrt, also von einem ersten ausgeschalteten Betriebszustand über einen eingeschalteten Betriebszustand, zum Beispiel einem Fahrbetrieb, zu einem zweiten ausgeschalteten Betriebszustand betreffen. Somit können die Daten von dem ersten Fahrzeug insbesondere nur einmal direkt an ein bestimmtes zweites Fahrzeug in dem Ad-Hoc-Netz gesendet werden. Anschließend können die Daten nur noch indirekt über ein anderes Fahrzeug an das bestimmte zweite Fahrzeug von dem ersten Fahrzeug aus gesendet werden.

Hierdurch ergibt sich der Vorteil, dass sich eine Sendekette, also eine Reihenfolge der Fahrzeuge in der Sendekette, ständig verändert. Damit kann ein Rückverfolgen der Daten zum ursprünglichen Absender erschwert werden, sodass das Zuordnen des Absenders zu den Daten weiter verhindert wird.

Eine weitere Ausführungsform sieht vor, dass vor dem Entscheiden das erste Fahrzeug bei einem Fahrantritt bei einer Verwaltungsservereinrichtung angemeldet wird. Anschließend erfasst das erste Fahrzeug eine Liste mit Kommunikationsinformationen zu den übrigen Teilnehmern des Ad-Hoc-Netzes von der Verwaltungsservereinrichtung. Das Senden der Daten erfolgt dann in Abhängigkeit von den Kommunikationsinformationen.

Das heißt, das erste Fahrzeug, und insbesondere auch jedes weitere der Vielzahl an teilnehmenden Fahrzeugen des Ad-Hoc-Netzes, stellt bei Fahrantritt, also im eingeschalteten Betriebszustand, seine jeweiligen Anmeldedaten an die Verwaltungsservereinrichtung bereit. Die Anmeldedaten können insbesondere eine Fahrzeugkennung und/oder eine IP-Adresse und/oder eine Fahrgestellnummer und/oder Verschlüsselungsinformationen des jeweiligen Fahrzeugs umfassen. Die Verwaltungsservereinrichtung kann die Anmeldedaten erfassten und speichern. Anschließend kann die Verwaltungsservereinrichtung für jedes der teilnehmenden Fahrzeuge des Ad-Hoc-Netzes unter Berücksichtigung der Anmeldedaten die Liste mit den Kommunikationsinformationen zu den übrigen teilnehmenden Fahrzeugen und der fahrzeugexternen Servereinrichtung generieren. Die Verwaltungsservereinrichtung kann die jeweilige Liste dann an das entsprechende Fahrzeug bereitstellen. Bevorzugt kann die Liste in Abhängigkeit von einer Teilnehmeranzahl des Ad-Hoc-Netzes periodisch aktualisiert werden. Vorzugsweise kann die zuvor beschriebene fahrzeugexterne Servereinrichtung auch die Verwaltungsservereinrichtung darstellen.

Eine weitere Ausführungsform sieht vor, dass die Bedingung veranlasst, dass die Daten nur dann direkt an die fahrzeugexterne Servereinrichtung gesendet werden, wenn die Daten zuvor über eine vorgegebene Anzahl an weiteren Fahrzeugen des Ad-Hoc-Netzes gesendet wurden.

Mit anderen Worten, kann die festgelegte oder festlegbare Bedingung mit sich bringen, dass eine Länge der Sendekette, also eine Anzahl an Fahrzeugen, über die die Daten von dem ersten Fahrzeug an die fahrzeugexterne Servereinrichtung gesendet werden, deterministisch festgelegt wird. Zum Beispiel können zusammen mit den Daten auch ein Zählwert und ein Grenzwert an das jeweilige nächste Fahrzeug gesendet werden. Der Zählwert kann beispielsweise eine aktuelle Anzahl an Hops, also an Übertragungen von einem zum nächsten Fahrzeug, beschreiben. Der Grenzwert kann hingegen eine maximale Anzahl an Hops zum Übertragen der Daten bestimmen. Der Zählwert kann somit mit jedem Hop, also mit jedem weiteren Senden der Daten an ein weiteres Fahrzeug, um eins hochgezählt werden. Die Daten können dann so lange von Fahrzeug zu Fahrzeug übertragen werden, bis der Zählwert den Grenzwert erreicht. Somit können die Daten also nur dann an die fahrzeugexterne Servereinrichtung übermittelt werden, wenn die Anzahl an Fahrzeugen, über die die Daten an die fahrzeugexterne Servereinrichtung gesendet wurden, den Grenzwert erreicht.

Eine weitere Ausführungsform sieht vor, dass die Bedingung veranlasst, dass die Daten mit einer Wahrscheinlichkeit direkt an die fahrzeugexterne Servereinrichtung gesendet werden, und die Daten mit einer auf die Wahrscheinlichkeit bezogene Gegenwahrscheinlichkeit über das zweite Fahrzeug an die fahrzeugexterne Servereinrichtung gesendet werden.

Anders ausgedrückt, können die Daten gegebenenfalls also nicht direkt an die fahrzeugexterne Servereinrichtung geschickt, sondern mit der Gegenwahrscheinlichkeit zuerst an das zweite Fahrzeug, welches den ursprünglichen Absender verdecken kann, übertragen werden. Die Wahrscheinlichkeit kann bevorzugt für das erste Fahrzeug, insbesondere für jedes erste Fahrzeug, also für jeden Teilnehmer des Ad-Hoc-Netzes, einzeln festgelegt werden. Alternativ kann die Wahrscheinlichkeit auch gemeinsam für jedes erste Fahrzeug vorgegeben sein. Weiterhin kann die Wahrscheinlichkeit auch für jeden einzelnen Sendevorgang, also für jedes Senden von Daten, neu bestimmt werden.

Eine weitere Ausführungsform sieht vor, dass, falls die Daten über das zweite Fahrzeug an die fahrzeugexterne Servereinrichtung gesendet werden, Absenderinformationen des ersten Fahrzeugs aus den Daten gelöscht werden.

Das heißt, das zweite Fahrzeug kann sich als Absender der Daten ausgeben. Somit kann der ursprüngliche Absender der Daten, also insbesondere das erste Fahrzeug, in der Sendekette, verdeckt werden. Dadurch können beim Hinterlegen der Daten in der fahrzeugexternen Servereinrichtung zwar die Daten gemeinsam mit den Absenderinformationen hinterlegt sein, jedoch ist der ursprüngliche Absender der Daten gegebenenfalls nicht bekannt. Aus Sicht der fahrzeugexternen Servereinrichtung können die Daten ursprünglich von dem ersten Fahrzeug stammen, sie könnten aber ebenso gut auch von dem zweiten Fahrzeug, oder insbesondere einem der weiteren Fahrzeuge des Ad-Hoc-Netzes, ursprünglich bereitgestellt worden sein. Hierdurch ergibt sich der Vorteil der glaubhaften Abstreitbarkeit (plausible deniability), denn die fahrzeugexterne Servereinrichtung kann nicht Gewissheit sagen, wer die Daten ursprünglich gesendet hat.

Besonders bevorzugt können die Daten zum Authentifizieren des Absenders zusammen mit einem Authentifizierungsmerkmal gesendet werden. Somit kann der Empfänger der Daten, also das zweite Fahrzeug oder die fahrzeugexterne Servereinrichtung, sicherstellen, dass eine Authentizität des Absenders gewährleistet ist. Dazu kann das Authentifizierungsmerkmal beispielsweise zusammen mit den Anmeldeinformationen beim Anmelden bei der Verwaltungsservereinrichtung übertragen werden. Die Liste mit den Kommunikationsinformationen kann dann auch die Authentifizierungsmerkmale der übrigen Teilnehmer des Ad-Hoc-Netzes umfassen. Somit kann beispielsweise das zweite Fahrzeug beim Empfangen der Daten zunächst das mitgesendete Authentifizierungsmerkmal des ersten Fahrzeugs mit den Authentifizierungsmerkmalen in der Liste vergleichen. Nur wenn das Authentifizierungsmerkmal mit einem der Authentifizierungsmerkmale der Liste übereinstimmt, können die Daten anschließend von dem zweiten Fahrzeug an eine weitere Zwischenstation oder die fahrzeugexterne Servereinrichtung weitergeleitet werden.

Eine weitere Ausführungsform sieht vor, dass die Daten mittels asymmetrischer Kryptografie, insbesondere mittels eines Verschlüsselungsverfahrens basierend auf elliptischen Kurven oder eines Public-Key-Verschlüsselungsverfahrens, verschlüsselt gesendet werden.

Insbesondere können die Daten somit reversibel verschlüsselt gesendet werden. Hierdurch ergibt sich der Vorteil, dass die Daten, ohne verfälscht zu werden, von einem Dritten, der insbesondere kein Teilnehmer des Ad-Hoc-Netzes ist, oder für den die Daten eigentlich nicht bestimmt sind, nicht ausgelesen werden können. Es wird also ein Lesen der Daten durch einen Dritten verhindert.

Durch eine derartige Verschlüsselung können die Daten somit reversibel ver- und entschlüsselt werden, ohne dass die Daten zum Beispiel durch Verrauschen verfälscht werden. Die Verschlüsselungsinformationen, wie beispielsweise Public- und Private-Key-Schlüsselpaare, können zusammen mit einem entsprechenden Zertifikat zur Verschlüsselung bei einer Installation der Anonymisierungsfunktion in dem Fahrzeug hinterlegt werden. Somit können die Teilnehmer des Anonymisierungsverfahrens sich gegenseitig authentifizieren und die Daten können somit sicher übertragen werden.

Die Erfindung betrifft auch eine Anonymisierungsvorrichtung zum anonymisierten Bereitstellen von Daten eines ersten Fahrzeugs für eine fahrzeugexterne Servereinrichtung. Die Anonymisierungsvorrichtung umfasst dazu eine Recheneinrichtung zum Entscheiden gemäß einer festgelegten oder festlegbaren Bedingung zwischen einem Senden der Daten direkt an die fahrzeugexterne Servereinrichtung, oder einem Senden der Daten über wenigstens ein weiteres Fahrzeug, das mit dem ersten Fahrzeug in Kommunikationsverbindung steht, an die fahrzeugexterne Servereinrichtung. Weiterhin umfasst die Anonymisierungsvorrichtung eine Kommunikationseinrichtung zum Senden der Daten entsprechend der Entscheidung.

Die Erfindung betrifft auch ein Kraftfahrzeug mit der zuvor genannten Anonym isierungsvorrichtung.

Schließlich kann die Erfindung auch ein System aus einer Vielzahl an Kraftfahrzeugen mit der zuvor genannten Anonymisierungsvorrichtung und einer fahrzeugexternen Servereinrichtung betreffen.

Zu der Erfindung gehören auch Weiterbildungen der erfindungsgemäßen Anonymisierungsvorrichtung, des erfindungsgemäßen Kraftfahrzeugs und des Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Anonymisierungsvorrichtung, des erfindungsgemäßen Kraftfahrzeugs und des Systems hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Ad-Hoc-Netzes mit einer Vielzahl an Fahrzeugen und einer fahrzeugexternen Serverein-richtung zum anonymisierten Bereitstellen von Fahrzeugdaten an die fahrzeugexterne Servereinrichtung; und
- Fig. 2: eine schematische Darstellung von einzelnen Verfahrensschritten zum anonymisierten Bereitstellen von Daten eines ersten Fahrzeugs für eine fahrzeugexterne Servereinrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

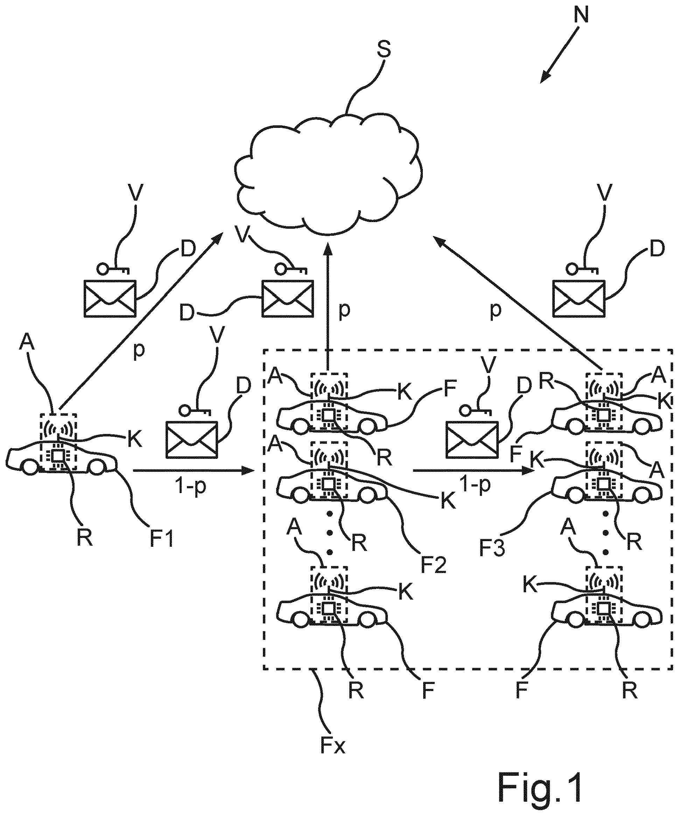

In Fig. 1 ist ein Ad-Hoc-Netz N umfassend eine fahrzeugexterne Servereinrichtung S, ein erstes Fahrzeug F1 und eine Vielzahl an weiteren Fahrzeugen Fx dargestellt. Die fahrzeugexterne Servereinrichtung S, auch zentrales Backend genannt, ist dazu ausgebildet Daten D, insbesondere Fahrzeugdaten, des ersten Fahrzeugs F1 zu speichern. Die Daten D des ersten Fahrzeugs F1 können dann von der fahrzeugexternen Servereinrichtung S an andere Fahrzeuge übermittelt oder von anderen Fahrzeugen abgerufen werden, um einen Austausch der Fahrzeugdaten von Fahrzeugen untereinander zu ermöglichen. Bei den Daten D kann es sich beispielsweise um Fahrstreckendaten, wie beispielsweise eine aktuelle Position im Zusammenhang mit einem Schlagloch und/oder im Zusammenhang mit einem freien Parkplatz, handeln. Da Positionsdaten, also ein aktueller Aufenthalt des ersten Fahrzeugs F1, in der Regel persönliche Daten eines Insassen des ersten Fahrzeugs F1 darstellen, ist es vorteilhaft, die Daten D, die von dem ersten Fahrzeugs F1 bereitgestellt werden, zu anonymisieren. Somit kann verhindert werden, dass der ursprüngliche Absender der Daten D, also das Fahrzeug F1, beim Hinterlegen der Daten D in der fahrzeugexternen Servereinrichtung S, den hinterlegten Daten D zugeordnet werden kann.

Um nun das anonymisierte Bereitstellen der Daten D des ersten Fahrzeugs F1 für die fahrzeugexterne Servereinrichtung S zu realisieren, können in dem Ad-Hoc-Netz N die Daten D gemäß einer festgelegten oder festlegbaren Bedingung von dem Fahrzeug F1 direkt an die fahrzeugexterne Servereinrichtung S gesendet werden oder über wenigstens ein zweites Fahrzeug F2 aus der Vielzahl an Fahrzeugen Fx, das mit dem ersten Fahrzeug F1 in Kommunikationsverbindung steht, an die fahrzeugexterne Servereinrichtung S gesendet werden. Dazu weist das erste Fahrzeug F1 und jedes der Fahrzeuge der Vielzahl an weiteren Fahrzeugen Fx eine Anonymisierungsvorrichtung A mit einer Recheneinrichtung R und einer Kommunikationseinrichtung K auf. Mittels der Recheneinrichtung R kann dabei gemäß der festgelegten oder festlegbaren Bedingung zwischen dem direkten Senden der Daten D von dem ersten Fahrzeug F1 an die fahrzeugexterne Servereinrichtung S und dem indirekten Senden der Daten D über wenigstens eines der Vielzahl an weiteren Fahrzeugen Fx an die fahrzeugexterne Servereinrichtung S entschieden werden. Die Kommunikationseinrichtung K kann entsprechend ausgebildet sein, eine Kommunikationsverbindung zwischen dem Sender, also dem ersten Fahrzeug F1, und dem jeweiligen Empfänger, also der fahrzeugexternen Servereinrichtung S, oder eines zweiten Fahrzeugs F2 aus der Vielzahl Fx an weiteren Fahrzeugen, herzustellen und die Daten D entsprechend der Entscheidung zu senden.

Durch das direkte oder indirekte Senden der Daten D an die fahrzeugexterne Servereinrichtung S kann die fahrzeugexterne Servereinrichtung S somit nicht mit Gewissheit sagen, wer der ursprüngliche Absender der Daten D war. Die Anonymisierung kann somit gemäß dem Prinzip der glaubhaften Abstreitbarkeit (plausible deniability) erfolgen.

Um die Anonymisierung noch zu verstärken, kann auch eine Sendekette entsprechend der festgelegten oder festlegbaren Bedingung verlängert werden. Dazu kann jedes der Fahrzeuge des Ad-Hoc-Netzes N die Daten D des ersten Fahrzeugs F1 beim indirekten Senden gemäß der festgelegten oder festlegbaren Bedingung entweder an die fahrzeugexterne Servereinrichtung S oder an ein weiteres Fahrzeug aus der Vielzahl Fx an weiteren Fahrzeugen senden. Zum Beispiel kann vorgesehen sein, dass das erste Fahrzeug F1 die Daten D gemäß der festgelegten oder festlegbaren Bedingung an das zweite Fahrzeug F2 übermittelt. Das zweite Fahrzeug F2, insbesondere die Recheneinrichtung R des zweiten Fahrzeugs F2, kann dann erneut gemäß der festgelegten oder festlegbaren Bedingung zwischen dem direkten Senden und dem indirekten Senden der Daten an die fahrzeugexterne Servereinrichtung S entscheiden. Entscheidet die Recheneinrichtung R des zweiten Fahrzeugs F2, dass die Daten D indirekt gesendet werden sollen, können die Daten D des ersten Fahrzeugs F1 anschließend an ein drittes Fahrzeug F3 aus der Vielzahl Fx an weiteren Fahrzeugen übermittelt werden. Analog zu dem zweiten Fahrzeug F2 kann auch das dritte Fahrzeug F3, insbesondere die Recheneinrichtung R des dritten Fahrzeugs F3, gemäß der festgelegten oder festlegbaren Bedingung erneut zwischen dem direkten oder dem indirekten Senden der Daten D an die fahrzeugexterne Servereinrichtung S entscheiden. Das Weiterleiten der Daten D über ein weiteres Fahrzeug kann dabei insbesondere solange erfolgen, bis die Daten D gemäß der festgelegten oder festlegbaren Bedingung schließlich von einem Fahrzeug in der Sendekette an die fahrzeugexterne Servereinrichtung S gesendet werden. Jeder Vorgang des Sendens der Daten D über ein weiteres Fahrzeug des Ad-Hoc-Netzes N kann dabei auch als Hop bezeichnet werden. Somit kann das gesamte Verfahren auch als n-Hop-Anonymisierung, also das Weiterleiten der Daten D über eine beliebige Anzahl n an Fahrzeugen, bezeichnet werden.

Je nach dem gewünschten Grad der Anonymisierung können somit n weitere Fahrzeuge als Mittelsmänner zum Überbringen der Daten herangezogen werden. Dies erhöht den Grad der Anonymisierung, wenn davon ausgegangen wird, dass einzelne Mittelsmänner beziehungsweise Zwischenstationen die Daten D böswillig abfangen könnten. Eine Länge der Sendekette kann insbesondere deterministisch, also mit einer festgelegten Anzahl an Weiterleitungen, festgelegt werden. Entsprechend kann die festgelegte oder festlegbare Bedingung einen Grenzwert für eine vorgegebene Anzahl an Fahrzeugen, über die die Daten D an die fahrzeugexterne Servereinrichtung S weitergeleitet werden sollen, darstellen. Zusätzlich oder alternativ kann die festgelegte oder festlegbare Bedingung auch darstellen, dass die Daten D mit einer Wahrscheinlichkeit p direkt an die fahrzeugexterne Servereinrichtung S gesendet werden beziehungsweise dass die Daten D mit einer auf die Wahrscheinlichkeit bezogenen Gegenwahrscheinlichkeit 1-p wenigstens über das zweite Fahrzeug F2 an die fahrzeugexterne Servereinrichtung S gesendet werden. Mit dem Parameter p kann somit die Wahrscheinlichkeit der Weiterleitung der Daten D definiert werden.

Vorzugsweise können Absenderinformationen des ursprünglichen Absenders der Daten D aus den Daten D beim indirekten Senden der Daten D gelöscht werden. Als Absenderinformationen können insbesondere Erkennungsmerkmale des ersten Fahrzeugs F1, wie beispielsweise eine Fahrgestellnummer, eine IP-Adresse, ein Kennzeichen oder ähnliches, verstanden werden. Somit gibt sich das jeweilige Empfängerfahrzeug als neuer Absender der Daten D aus. Für die fahrzeugexterne Servereinrichtung S scheint dann dasjenige Fahrzeug der Absender zu sein, welches als letztes in der Sendekette die Daten D empfangen hat und die Daten D schließlich direkt an die fahrzeugexterne Servereinrichtung S sendet.

Bevorzugt kann das jeweilige Empfängerfahrzeug, wie beispielsweise das zweite Fahrzeug F2 oder das dritte Fahrzeug F3, zufällig aus zusätzlichen Fahrzeugen F der Vielzahl Fx an weiteren Fahrzeugen des Ad-Hoc-Netzes N ausgewählt werden. Dazu kann in der jeweiligen Recheneinrichtung R beispielsweise ein Zufallsalgorithmus hinterlegt sein. Beim Versenden einer Nachricht, also der Daten D, von dem ersten Fahrzeug F1 aus kann somit ein zufälliges Fahrzeug aus der Vielzahl Fx an weiteren Fahrzeugen ausgewählt und sozusagen als Zwischenstation verwendet. Im Anschluss kann sich das Empfängerfahrzeug, also das zufällig ausgewählte Fahrzeug, als Sender der ursprünglichen Daten ausgeben und kann diese erneut entweder direkt an die fahrzeugexterne Servereinrichtung S senden oder die Daten an ein weiteres Fahrzeug als Zwischenstation weiterleiten.

Besonders bevorzugt kann die Kommunikation zwischen den Teilnehmern des Ad-Hoc-Netzes N erfolgen, indem jedes der teilnehmenden Fahrzeuge von einem in der Fig. 1 nicht gezeigten Verwaltungsservereinrichtung eine Liste mit Kontaktinformationen zu den übrigen Teilnehmern des Ad-Hoc-Netzes N empfängt. Bei Fahrantritt können sich die Fahrzeuge als Teilnehmer des Ad-Hoc-Netzes beispielsweise bei der Verwaltungsservereinrichtung anmelden und so insbesondere eine Fahrgestellnummer und/oder eine IP-Adresse und/oder Verschlüsselungsinformationen an die Verwaltungsservereinrichtung bereitstellen. Die Verwaltungsservereinrichtung kann die aktiven Teilnehmer, also diejenigen Teilnehmer des Ad-Hoc-Netzes N, die ihre Anmeldeinformationen übermittelt haben, registrieren und daraus eine Liste mit verfügbaren Fahrzeugen generieren und/oder den Fahrzeugen verteilen. Im ausgeschalteten Betriebszustand können die Fahrzeuge als Teilnehmer des Ad-Hoc-Netzes N wieder abgemeldet werden. Somit kann sichergestellt werden, dass sich die Teilnehmer des Ad-Hoc-Netzes N gegenseitig kennen. Bevorzugt kann die Liste auch nur eine Teilmenge der momentan aktiven, also angemeldeten, Fahrzeuge in dem Ad-Hoc-Netz N umfassen.

Vorzugsweise können die Daten D auch mittels einer Verschlüsselung V verschlüsselt versendet werden. Somit kann nicht nur eine Authentifizierung, sondern auch eine Verschlüsselung der Kommunikation der Fahrzeuge des Ad-Hoc-Netzes N und der fahrzeugexternen Servereinrichtung S erfolgen. Zum Schützen eines Kommunikationswegs, also einer Übertragung der Daten D, zwischen den Fahrzeugen sollten sich die Fahrzeuge des Ad-Hoc-Netzes N untereinander deshalb kennen und vertrauen. Dafür kann es sich anbieten, einen Mechanismus zu implementieren, der eine Authentizität des Absenders sicherstellt und eine gegenseitige Authentifizierung ermöglicht. Beispielsweise können die Daten mittels asymmetrischer Kryptografie, insbesondere mittels eines elliptischen Kurvenverschlüsselungsverfahrens oder eines Public-Key-Verschlüsselungsverfahrens verschlüsselt gesendet werden. Zum Beispiel können in den Fahrzeugen bei einer Installation der Funktion des Anonymisierens sogenannte Public- und Private-Schlüsselpaare zusammen mit Zertifikaten hinterlegt werden, die dann zur Authentifizierung der Fahrzeuge des Ad-Hoc-Netzes N untereinander verwendet werden können.

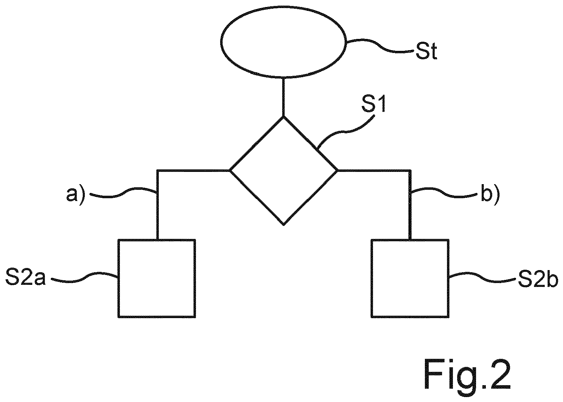

Fig. 2 zeigt eine schematische Darstellung von einzelnen Verfahrensschritten eines Verfahrens zum anonymisierten Bereitstellen von Daten D eines ersten Fahrzeugs F1 für eine fahrzeugexterne Servereinrichtung S. Das Verfahren kann mit einem Startschritt ST gestartet werden. In einem ersten Schritt S1 kann dann gemäß einer festgelegten oder festlegbaren Bedingung zwischen a) einem Senden der Daten D an die fahrzeugexterne Servereinrichtung oder b) einem Senden der Daten D über ein zweites Fahrzeug F2, das mit dem ersten Fahrzeug F1 in Kommunikationsverbindung steht, an die fahrzeugexterne Servereinrichtung S entschieden werden. Wird gemäß a) entschieden, können die Daten D in einem nächsten Schritt S2a direkt an die fahrzeugexterne Servereinrichtung S gesendet werden. Alternativ können die Daten D, für den Fall, dass sich gemäß b) entschieden wird, in einem Schritt S2b die Daten D indirekt über das zweite Fahrzeug F2 an die fahrzeugexterne Servereinrichtung S gesendet werden.

Dem in Fig. 1 und Fig. 2 gezeigten Ausführungsbeispiel kann folgende Situation beispielhaft zugrundeliegen. Von der fahrzeugexternen Servereinrichtung S soll eine Straßenkarte mit aktuell verfügbaren Parkplätzen in der Nähe eines Fahrzeugs an das Fahrzeug bereitgestellt werden. Dazu kann jedes Fahrzeug, das gerade einen aktuell freien Parkplatz passiert oder das gerade aus einem Parkplatz ausparkt, eine jeweilige Position, insbesondere eine GPS-Position (Global Positioning System - globales Positionierungssystem), an die fahrzeugexterne Servereinrichtung S bereitstellen. Die Position der freien Parkplätze kann somit von einem Fahrzeug, welches gerade auf der Suche nach einem freien Parkplatz ist, von der fahrzeugexternen Servereinrichtung S abgerufen werden. Positionsdaten sind jedoch als sensibel anzusehen und sollten deshalb anonymisiert werden. Über die zuvor beschriebene n-Hop-Anonymisierung könnte nun eine exakte Position eines aktuell freien Parkplatzes insbesondere über eine oder mehrere Zwischenstationen, also weitere Fahrzeuge als Mittelsmänner, an die fahrzeugexterne Servereinrichtung S versendet werden, ohne eine Identität des ursprünglichen Absenders preiszugeben.

Insgesamt kann durch die Erfindung somit eine n-Hop-Anonymisierung in Ad-Hoc-Car-to-Car- (Fahrzeug zu Fahrzeug) Netzen zur Anonymisierung von Fahrzeugdaten bereitgestellt werden.

## Patentansprüche

1. Verfahren zum Bereitstellen von Daten (D) eines ersten Fahrzeugs (F1) für eine fahrzeugexterne Servereinrichtung (S),
folgende Schritte umfassend:
- Entscheiden gemäß einer festgelegten oder festlegbaren Bedingung zwischen:
• Senden der Daten (D) direkt an die fahrzeugexterne Servereinrichtung (S), oder
• Senden der Daten (D) über ein zweites Fahrzeug (F2), das mit dem ersten Fahrzeug (F1) in Kommunikationsverbindung steht, an die fahrzeugexterne Servereinrichtung (S) und
- Senden der Daten (D) entsprechend der Entscheidung,
**dadurch gekennzeichnet, dass**
die Daten (D) des ersten Fahrzeugs (F1) anonymisiert bereitgestellt werden, indem, falls die Daten (D) über das zweite Fahrzeug (F2) an die fahrzeugexterne Servereinrichtung (S) gesendet werden, Absenderinformationen des ersten Fahrzeugs (F1) aus den Daten (D) gelöscht werden.

2. Verfahren nach Anspruch 1,
**dadurch gekennzeichnet, dass**
das erste Fahrzeug (F1), die fahrzeugexterne Servereinrichtung (S) und eine Vielzahl (Fx) an weiteren Fahrzeugen Teilnehmer eines Ad-Hoc Netzes (N) darstellen, wobei das zweite Fahrzeug (F2) zum Senden der Daten (D) zufällig aus der Vielzahl (Fx) an weiteren Fahrzeugen ausgewählt wird.

3. Verfahren nach Anspruch 2,
**dadurch gekennzeichnet, dass**
das Ad-Hoc-Netz (N) in Abhängigkeit von einem Betriebszustand der Fahrzeuge als Teilnehmer angepasst wird.

4. Verfahren nach Anspruch 2 oder 3,
**dadurch gekennzeichnet, dass**
beim mehrmaligen Senden von Daten (D), die Daten (D) höchstens einmal über jedes der Vielzahl (Fx) an Fahrzeugen an die fahrzeugexterne Servereinrichtung (S) gesendet werden.

5. Verfahren nach einem der Ansprüche 2 bis 4,
**gekennzeichnet durch** folgende Schritte:
- vor dem Entscheiden:
• Anmelden des ersten Fahrzeugs (F1) bei einer Verwaltungsservereinrichtung bei einem Fahrantritt, und
• Erfassen einer Liste mit Kommunikationsinformationen zu den übrigen Teilnehmern des Ad-Hoc-Netzes (N) von der Verwaltungsservereinrichtung, wobei
- das Senden der Daten (D) in Abhängigkeit von den Kommunikationsinformationen erfolgt.

6. Verfahren nach einem der Ansprüche 2 bis 5,
**dadurch gekennzeichnet, dass**
die Bedingung veranlasst, dass die Daten (D) nur dann direkt an die fahrzeugexterne Servereinrichtung (S) gesendet werden, wenn die Daten (D) zuvor über eine vorgegebene Anzahl an weiteren Fahrzeugen des Ad-Hoc Netzes (N) gesendet wurden.

7. Verfahren nach Anspruch einem der vorhergehenden Ansprüche,
**dadurch gekennzeichnet, dass**
die Bedingung veranlasst, dass
- die Daten (D) mit einer Wahrscheinlichkeit (p) direkt an die fahrzeugexterne Servereinrichtung (S) gesendet werden, und
- die Daten mit einer auf die Wahrscheinlichkeit bezogenen Gegenwahrscheinlichkeit (1-p) über das zweite Fahrzeug (F2) an die fahrzeugexterne Servereinrichtung (S) gesendet werden.

8. Verfahren nach einem der vorhergehenden Ansprüche,
**dadurch gekennzeichnet, dass**
die Daten (D) mittels asymmetrischer Kryptographie, insbesondere mittels eines Verschlüsselungsverfahrens basierend auf elliptischen Kurven oder eines Public-Key-Verschlüsselungsverfahrens, verschlüsselt gesendet werden.

9. Anonymisierungsvorrichtung (A) zum Bereitstellen von Daten (D) eines ersten Fahrzeugs (F1) für eine fahrzeugexterne Servereinrichtung (S), umfassend
- eine Recheneinrichtung (R) zum Entscheiden gemäß einer festgelegten oder festlegbaren Bedingung zwischen einem Senden der Daten (D) direkt an die fahrzeugexterne Servereinrichtung (S), oder einem Senden der Daten (D) über wenigstens ein zweites Fahrzeug (F2), das mit dem ersten Fahrzeug (F1) in Kommunikationsverbindung steht, an die fahrzeugexterne Servereinrichtung (S), und
- eine Kommunikationseinrichtung (K) zum Senden der Daten (D) entsprechend der Entscheidung
**dadurch gekennzeichnet, dass**
die Anonymisierungsvorrichtung (A) ausgebildet ist, die Daten (D) des ersten Fahrzeugs anonymisiert bereitzustellen, indem, falls die Daten (D) gemäß der Entscheidung über das zweite Fahrzeug (F2) an die fahrzeugexterne Servereinrichtung (S) zu senden sind, die Anonymisierungsvorrichtung (A) dazu eingerichtet ist, Absenderinformationen des ersten Fahrzeugs (F1) aus den Daten (D) zu löschen.

10. Kraftfahrzeug (F, F1, F,2, F3) mit einer Anonymisierungsvorrichtung (A) nach Anspruch 9.

## Claims

1. Method for the provision of data (D) of a first vehicle (F1) for a vehicle-external server device (S),
comprising the following steps:
- deciding according to a defined or definable condition between:
- sending the data (D) directly to the vehicle-external server device (S), or
- sending the data (D) to the vehicle-external server device (S) via a second vehicle (F2) which is in communication with the first vehicle (F1), and
- sending the data (D) according to the decision,
**characterised in that**
the data (D) of the first vehicle (F1) are provided in anonymized form, by, if the data (D) are sent to the vehicle-external server device (S) via the second vehicle (F2), sender information of the first vehicle (F1) being deleted from the data (D).

2. Method according to claim 1,
**characterised in that**
the first vehicle (F1), the vehicle-external server device (S) and a plurality of other vehicles (Fx) constitute members of an ad hoc network (N), wherein the second vehicle (F2) for sending the data (D) is selected randomly from the plurality (Fx) of other vehicles.

3. Method according to claim 2,
**characterised in that**
the ad hoc network (N) is adapted depending on an operational state of the vehicles as members.

4. Method according to claim 2 or 3,
**characterised in that**
when data (D) is sent several times, the data (D) is sent at most once via each of the plurality (Fx) of vehicles to the off-vehicle server device (S).

5. Method according to any one of claims 2 to 4,
**characterised by** the following steps:
- before the deciding:
- registering the first vehicle (F1) with a management server device at the start of a journey, and
- acquiring from the management server device a list with communication information relating to the other participants of the ad hoc network (N), wherein
- sending of the data (D) occurs in dependence on the communication information.

6. Method according to any one of claims 2 to 5,
**characterised in that**
the condition causes the data (D) to be sent directly to the vehicle-external server device (S) only if the data (D) has previously been sent via a specified number of other vehicles of the ad-hoc network (N).

7. Method according to any one of the preceding claims,
**characterised in that**
the condition causes
- the data (D) to be sent with a probability (p) directly to the vehicle-external server device (S), and
- the data to be sent via the second vehicle (F2) to the vehicle-external server device (S) with a complementary probability (1-p) related to the probability.

8. Method according to any one of the preceding claims,
**characterised in that**
the data (D) is sent in encrypted form by means of asymmetric cryptography, in particular by means of an encryption method based on elliptic curves or a public-key encryption method.

9. Anonymization apparatus (A) for the provision of data (D) of a first vehicle (F1) for a vehicle-external server device (S), comprising
- a processing unit (R) for deciding, according to a defined or definable condition, between sending the data (D) directly to the vehicle-external server means (S), or sending the data (D) to the vehicle-external server means (S) via at least one second vehicle (F2) that is in communication with the first vehicle (F1), and
- a communication device (K) for sending the data (D) according to the decision
**characterised in that**
the anonymization apparatus (A) is configured to provide the data (D) of the first vehicle in an anonymized form by, if according to the decision the data (D) is to be sent to the vehicle-external server device (S) via the second vehicle (F2), the anonymization apparatus (A) being configured to delete sender information of the first vehicle (F1) from the data (D).

10. Motor vehicle (F, F1, F,2, F3) comprising an anonymization apparatus (A) according to claim 9.

## Revendications

1. Procédé de fourniture de données (D) d'un premier véhicule (F1) pour un système de serveur externe au véhicule (S),
comprenant les étapes suivantes :
- la décision selon une condition définie ou définissable entre :
• l'envoi des données (D) directement au système de serveur externe au véhicule (S), ou
• l'envoi des données (D) par le biais d'un second véhicule (F2) qui est en liaison de communication avec le premier véhicule (F1) au système de serveur externe au véhicule (S) et
- l'envoi des données (D) en fonction de la décision,
**caractérisé en ce que**
les données (D) du premier véhicule (F1) sont fournies de façon anonymisées en effaçant des données (D), dans le cas où les données (D) sont envoyées par le biais du second véhicule (F2) au système de serveur externe au véhicule (S), des informations d'expéditeur du premier véhicule (F1).

2. Procédé selon la revendication 1,
**caractérisé en ce que**
le premier véhicule (F1), le système de serveur externe au véhicule (S) et une multiplicité (Fx) d'autres véhicules constituent des participants d'un réseau ad hoc (N), dans lequel le second véhicule (F2) est choisi pour envoyer les données (D) de façon aléatoire à partir de la multiplicité (Fx) à d'autres véhicules.

3. Procédé selon la revendication 2,
**caractérisé en ce que**
le réseau ad hoc (N) est ajusté en tant que participant en fonction d'un état de fonctionnement des véhicules.

4. Procédé selon la revendication 2 ou 3,
**caractérisé en ce que**
en cas d'envois multiples de données (D), les données (D) sont envoyées au plus une fois par le biais de chacun de la multiplicité (Fx) de véhicules au système de serveur externe au véhicule (S).

5. Procédé selon l'une quelconque des revendications 2 à 4,
**caractérisé par** les étapes suivantes :
- avant la décision :
• signalement du premier véhicule (F1) par un système de serveur de gestion lors du début d'un trajet, et
• saisie d'une liste comportant des informations de communication sur les autres participants du réseau ad hoc (N) par le système de serveur de gestion, dans lequel
- l'envoi des données (D) s'effectue en fonction des informations de communication.

6. Procédé selon l'une quelconque des revendications 2 à 5,
**caractérisé en ce que**
la condition veut que les données (D) ne soient envoyées directement au système de serveur externe au véhicule (S) que lorsque les données (D) sont envoyées auparavant à un nombre prédéterminé d'autres véhicules du réseau ad hoc (N).

7. Procédé selon l'une quelconque des revendications précédentes,
**caractérisé en ce que**
la condition veut que
- les données (D) soient envoyées avec une probabilité (p) directement au système de serveur externe au véhicule (S), et
- les données soient envoyées avec une probabilité contraire (1-p) relative à la probabilité par le biais du second véhicule (F2) au système de serveur externe au véhicule (S).

8. Procédé selon l'une quelconque des revendications précédentes,
**caractérisé en ce que**
les données (D) sont envoyées codées au moyen d'une cryptographie asymétrique, en particulier au moyen d'un procédé de codage se basant sur des courbes elliptiques ou d'un procédé de codage à clé publique.

9. Dispositif d'anonymisation (A) pour fournir des données (D) d'un premier véhicule (F1) pour un système de serveur externe au véhicule (S), comprenant
- un système de calcul (R) pour décider selon une condition définie ou définissable entre un envoi des données (D) directement au système de serveur externe au véhicule (S), ou un envoi des données (D) par le biais d'au moins un second véhicule (F2) qui est en liaison de communication avec le premier véhicule (F1) au système de serveur externe au véhicule (S) et
- un système de communication (K) pour l'envoi des données (D) en fonction de la décision
**caractérisé en ce que**
le dispositif d'anonymisation (A) est conçu pour fournir de façon anonymisée les données (D) du premier véhicule, de telle sorte que, dans le cas où les données (D) sont à envoyer selon la décision par le biais du second véhicule (F2) au système de serveur externe au véhicule (S), le dispositif d'anonymisation (A) est conçu pour effacer des données, des informations d'expéditeur du premier véhicule (F1).

10. Véhicule automobile (F, F1, F,2, F3) comportant un dispositif d'anonymisation (A) selon la revendication 9.
